# EUROPEAN PATENT APPLICATION

(11) **EP 4 838 612 A1**
(43) Date of publication of application: **11.11.2026**
(21) Application number: 24941313.9
(22) Date of filing: 19.08.2024
(51) Int. Cl.: H01M 10/0583

(54) **BATTERY STACKING METHOD, APPARATUS, AND SYSTEM**

(30) Priority: 27.05.2024 CN 202410666084
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: LIU, Qingzheng, Ningde, Fujian 352100 (CN); FENG, Shiping, Ningde, Fujian 352100 (CN); ZHENG, Qiuhui, Ningde, Fujian 352100 (CN); CHEN, Canbin, Ningde, Fujian 352100 (CN); WEI, Tengfei, Ningde, Fujian 352100 (CN)
(74) Representative: Lorenz Seidler Gossel Part. mbB
(86) International application number: PCT/CN2024/113205
(87) International publication number: WO 2025/246035

(57) **Abstract**

The present application discloses a battery stacking method, an apparatus, and a system. A stack stacking device comprises a bearing plate and a limiting assembly capable of moving on the bearing plate, a plurality of cathode sheets are spaced on an anode material strip, the anode material strip is folded at folding positions corresponding to spacings between adjacent cathode sheets to obtain a plurality of electrode sheet units, and each electrode sheet unit is stacked on a bearing plate of a stacking mechanism. The method comprises: acquiring a target offset distance of a first electrode sheet unit of the anode material strip relative to a first reference position; obtaining a target stacking position of the first electrode sheet unit on the basis of the target offset distance and a second reference position, wherein the second reference position is a reference position set when the electrode sheet units of the anode material strip are stacked on the bearing plate; and if the first electrode sheet unit is the first stacked electrode sheet unit, when the first electrode sheet unit is stacked on the bearing plate, controlling the limiting assembly to push the first electrode sheet unit to move to the target stacking position.

## Description

### CROSS-REFERENCE TO RELATED APPLICATIONS

This application claims priority to Chinese Patent Application No. 202410666084.6, filed on May 27, 2024 and entitled "BATTERY STACKING METHOD, APPARATUS, AND SYSTEM", which is incorporated herein by reference in its entirety.

### TECHNICAL FIELD

This application relates to the field of battery technologies, and in particular, to a battery stacking method, apparatus, and system.

### BACKGROUND

In production of battery cells, cathode plates are spaced apart on an anode strip, which is folded at spacings between adjacent cathode plates as folding positions, and stacked to a stacking position. Since each electrode plate unit (each electrode plate unit includes one cathode plate) is stacked in a free stacking manner, the stacking positions of the electrode plate units may vary during stacking, especially during stacking of the first electrode plate, tail flicking occurs, that is, the stacking position of the first electrode plate is highly random, which leads to poor accuracy of the stacking position.

### SUMMARY

This application provides a battery stacking method, apparatus, and system, so as to solve the problem of poor accuracy of electrode plate stacking positions.

According to a first aspect, this application provides a battery stacking method applied to a battery stacking device, where the battery stacking device includes a stacking mechanism for stacking an anode strip, the stacking mechanism includes a carrying plate and a limiting assembly capable of moving on the carrying plate, a plurality of cathode plates are spaced apart on the anode strip, the anode strip is folded at spacings between adjacent cathode plates as folding positions to obtain a plurality of electrode plate units, each electrode plate unit includes one cathode plate, each electrode plate unit is stacked onto the carrying plate of the stacking mechanism, and the method includes:
obtaining a target offset distance of a first electrode plate unit of the anode strip relative to a first reference position, where the first reference position is a reference position set for the anode strip during a strip transportation stage;
obtaining a target stacking position of the first electrode plate unit based on the target offset distance and a second reference position, where the second reference position is a reference position set when the electrode plate units of the anode strip are stacked on the carrying plate; and
controlling the limiting assembly to push the first electrode plate unit to move to the target stacking position when the first electrode plate unit is stacked onto the carrying plate under a condition that the first electrode plate unit is the first stacked electrode plate unit.

In this embodiment of this application, when the first electrode plate unit is stacked onto the carrying plate, the limiting assembly is controlled to push the first electrode plate unit to move to the target stacking position, so as to adjust the position where the first electrode plate unit is stacked onto the carrying plate, allowing for more accurate stacking position of the first stacked electrode plate unit, and since the stacking position of the first electrode plate unit is no longer a random position after dropping, the tail flicking problem existing in the stacking of the first electrode plate can be effectively solved.

In an embodiment of this application, after the controlling the limiting assembly to push the first electrode plate unit to move to the target stacking position, the method further includes:
in a case that a second electrode plate unit of the anode strip is stacked on the first electrode plate unit, controlling the limiting assembly to push the second electrode plate unit to be aligned with the first electrode plate unit.

In this embodiment of this application, after the second electrode plate unit is stacked on the first electrode plate unit, the limiting assembly is controlled to push the electrode plate units to move to the target stacking position, and during the pushing process, under the action of the limiting assembly, the second electrode plate unit can be pushed to be aligned with the first electrode plate unit on the carrying plate, achieving the purpose of electrode plate shaping.

In an embodiment of this application, the anode strip includes an anode plate and separators disposed on both sides of the anode plate, a width of the separator in a first direction being greater than a width of the anode plate in the first direction, and the first direction being parallel to a crease formed by the folding; and
the target offset distance is an offset distance of an edge of the anode plate relative to the first reference position.

In this embodiment of this application, during determining of the target offset distance, an offset distance of an edge of the anode strip relative to the first reference position is determined with the first reference position as a reference, so that the target offset distance can be used as the offset distance of the stacking position of the first electrode plate unit relative to the second reference position when the first electrode plate unit is stacked onto the carrying plate, so as to accurately calculate the stacking position of the first electrode plate unit, achieve precise shaping of the first electrode plate, and effectively solve the tail flicking problem existing for the first electrode plate.

In an embodiment of this application, the battery stacking device further includes a first detection unit and a second detection unit; and
the obtaining the target offset distance of the first electrode plate unit of the anode strip relative to the first reference position includes:
obtaining a first offset distance obtained through detection by the first detection unit and a second offset distance obtained through detection by the second detection unit, where the first offset distance is a distance between an edge of the anode plate and an edge of the separator in the first electrode plate unit, and the second offset distance is a second offset distance of the edge of the separator in the first electrode plate unit relative to the first reference position; and
using a sum of the first offset distance and the second offset distance as the target offset distance.

In this embodiment of this application, the first offset distance and the second offset distance are obtained through the two detection units respectively, thereby obtaining the target offset distance of the edge of the anode plate in the first electrode plate unit relative to the first reference position, so as to facilitate subsequent calculation of the target stacking position according to the target offset distance, thereby improving the accuracy of the stacking position of the first electrode plate.

In an embodiment of this application, the obtaining the target stacking position of the first electrode plate unit based on the target offset distance and the second reference position includes:
offsetting the target offset distance on the basis of the second reference position to obtain the target stacking position, where the target stacking position is a stacking area, and a width of the stacking area in the first direction is determined based on a width of the anode plate in the first direction.

In this embodiment of this application, the target offset distance is offset on the basis of the second reference position to obtain the target stacking position, which facilitates subsequent adjustment of the position where the first electrode plate unit is stacked onto the carrying plate when the first electrode plate unit is stacked onto the carrying plate, allowing for more accurate stacking position of the first stacked electrode plate unit, and effectively solving the tail flicking problem existing in the stacking of the first electrode plate.

In an embodiment of this application, the limiting assembly includes a first limiting member and a second limiting member disposed opposite each other in the first direction;
the controlling the limiting assembly to push the first electrode plate unit to move to the target stacking position includes:
controlling the first limiting member and the second limiting member to push the first electrode plate unit to move to the target stacking position; and
after the controlling the limiting assembly to push the first electrode plate unit to move to the target stacking position, the method further includes:
   controlling the first limiting member and the second limiting member to separately retract to a first position, where a distance between the first limiting member and the second limiting member retracted to the first position is greater than or equal to a width of the separator.

In this embodiment of this application, after the first electrode plate unit moves to the target stacking position, the first limiting member and the second limiting member retract to the first position. The distance between the first limiting member and the second limiting member retracted to the first position is equal to the width of the separator in the first direction, or slightly greater than the width of the separator in the first direction, so as to prevent the first limiting member and the second limiting member from jamming the separator, which otherwise makes the separator unable to lay flat.

In an embodiment of this application, the carrying plate is provided with suction holes; and
the controlling the limiting assembly to push the first electrode plate unit to move to the target stacking position when the first electrode plate unit is stacked onto the carrying plate under a condition that the first electrode plate unit is the first stacked electrode plate unit includes:
controlling the carrying plate to extend from an initial position to a receiving position so that the first electrode plate unit is stacked onto the carrying plate when the first electrode plate unit drops under a condition that the first electrode plate unit is the first stacked electrode plate unit;
controlling the limiting assembly to push the first electrode plate unit to move to the target stacking position; and
controlling the suction holes to conduct suction to adsorb the first electrode plate unit covering the suction holes.

In this embodiment of this application, when the first electrode plate unit is the first stacked electrode plate unit and the first electrode plate unit drops, the carrying plate extends from the initial position to the receiving position, so that the first electrode plate unit is stacked onto support members of the carrying plate, and after the limiting assembly pushes the first electrode plate unit to move to the target stacking position, the suction holes on the support members are controlled to conduct suction to adsorb the first electrode plate unit. In this way, subsequently, after the second electrode plate unit drops on the first electrode plate unit, when the limiting assembly pushes the first electrode plate unit and the second electrode plate unit to move, the first electrode plate unit will not move due to the adsorption of the suction holes, and the second electrode plate unit will move with the limiting assembly due to no adsorption of the suction holes, thereby aligning the second electrode plate unit with the first electrode plate unit and achieving the purpose of electrode plate shaping.

In an embodiment of this application, the method further includes:
when the number of electrode plate units stacked on the carrying plate is a preset threshold, cutting off a connection between a third electrode plate unit and other electrode plate units, where the third electrode plate unit is the last electrode plate unit stacked onto the carrying plate, and the other electrode plate units refer to electrode plate units of the anode strip that are not stacked onto the carrying plate; and
controlling the suction holes to stop conducting suction and controlling the carrying plate to retract to the initial position, so that the electrode plate units stacked on the carrying plate drop onto a stacking platform below the carrying plate.

In this embodiment, when the number of electrode plate units stacked on the carrying plate is the preset threshold, the connection between the third electrode plate unit and other electrode plate units is cut off; and the suction holes are controlled to stop conducting suction, and the carrying plate is controlled to retract to the initial position, so that the electrode plate units stacked on the carrying plate drop onto the stacking platform below the carrying plate. In this way, a group of neatly stacked electrode plate units are obtained for use in subsequent battery cell manufacturing processes.

According to a second aspect, an embodiment of this application provides a battery stacking apparatus applied to a battery stacking device, where the battery stacking device includes a stacking mechanism for stacking an anode strip, the stacking mechanism includes a carrying plate and a limiting assembly capable of moving on the carrying plate, a plurality of cathode plates are spaced apart on the anode strip, the anode strip is folded at spacings between adjacent cathode plates as folding positions to obtain a plurality of electrode plate units, each electrode plate unit includes one cathode plate, each electrode plate unit is stacked onto the carrying plate of the stacking mechanism, and the battery stacking apparatus includes:
a first obtaining module configured to obtain a target offset distance of a first electrode plate unit of the anode strip relative to a first reference position, where the first reference position is a reference position set for the anode strip during a strip transportation stage;
a second obtaining module configured to obtain a target stacking position of the first electrode plate unit based on the target offset distance and a second reference position, where the second reference position is a reference position set when electrode plate units of the anode strip are stacked on the carrying plate; and
a first control module configured to control the limiting assembly to push the first electrode plate unit to move to the target stacking position when the first electrode plate unit is stacked onto the carrying plate under a condition that the first electrode plate unit is the first stacked electrode plate unit.

In this embodiment of this application, when the first electrode plate unit is stacked onto the carrying plate, the limiting assembly is controlled to push the first electrode plate unit to move to the target stacking position, so as to adjust the position where the first electrode plate unit is stacked onto the carrying plate, allowing for more accurate stacking position of the first stacked electrode plate unit, and since the stacking position of the first electrode plate unit is no longer a random position after dropping, the tail flicking problem existing in the stacking of the first electrode plate can be effectively solved.

In an embodiment of this application, the battery stacking apparatus further includes:
a second control module configured to: in a case that a second electrode plate unit of the anode strip is stacked on the first electrode plate unit, control the limiting assembly to push the second electrode plate unit to be aligned with the first electrode plate unit.

In this embodiment of this application, after the second electrode plate unit is stacked on the first electrode plate unit, the limiting assembly is controlled to push the electrode plate units to move to the target stacking position, and during the pushing process, under the action of the limiting assembly, the second electrode plate unit can be pushed to be aligned with the first electrode plate unit on the carrying plate, achieving the purpose of electrode plate shaping.

In an embodiment of this application, the anode strip includes an anode plate and separators disposed on both sides of the anode plate, a width of the separator in a first direction being greater than a width of the anode plate in the first direction, and the first direction being parallel to a crease formed by the folding; and
the target offset distance is an offset distance of an edge of the anode plate relative to the first reference position.

In this embodiment of this application, during determining of the target offset distance, an offset distance of an edge of the anode strip relative to the first reference position is determined with the first reference position as a reference, so that the target offset distance can be used as the offset distance of the stacking position of the first electrode plate unit relative to the second reference position when the first electrode plate unit is stacked onto the carrying plate, so as to accurately calculate the stacking position of the first electrode plate unit, achieve precise shaping of the first electrode plate, and effectively solve the tail flicking problem existing for the first electrode plate.

In an embodiment of this application, the battery stacking device further includes a first detection unit and a second detection unit; and
the first obtaining module includes:
an obtaining submodule configured to obtain a first offset distance obtained through detection by the first detection unit and a second offset distance obtained through detection by the second detection unit, where the first offset distance is a distance between an edge of the anode plate and an edge of the separator in the first electrode plate unit, and the second offset distance is a second offset distance of the edge of the separator in the first electrode plate unit relative to the first reference position; and
a determining submodule configured to use a sum of the first offset distance and the second offset distance as the target offset distance.

In this embodiment of this application, the first offset distance and the second offset distance are obtained through the two detection units respectively, thereby obtaining the target offset distance of the edge of the anode plate in the first electrode plate unit relative to the first reference position, so as to facilitate subsequent calculation of the target stacking position according to the target offset distance, thereby improving the accuracy of the stacking position of the first electrode plate.

In an embodiment of this application, the second obtaining module is specifically configured to offset the target offset distance on the basis of the second reference position to obtain the target stacking position, where the target stacking position is a stacking area, and a width of the stacking area in the first direction is determined based on a width of the anode plate in the first direction.

In this embodiment of this application, the target offset distance is offset on the basis of the second reference position to obtain the target stacking position, which facilitates subsequent adjustment of the position where the first electrode plate unit is stacked onto the carrying plate when the first electrode plate unit is stacked onto the carrying plate, allowing for more accurate stacking position of the first stacked electrode plate unit, and effectively solving the tail flicking problem existing in the stacking of the first electrode plate.

In an embodiment of this application, the limiting assembly includes a first limiting member and a second limiting member disposed opposite each other in the first direction;
the first control module is specifically configured to control the first limiting member and the second limiting member to push the first electrode plate unit to move to the target stacking position; and
the battery stacking apparatus further includes:
   a third control module configured to control the first limiting member and the second limiting member to separately retract to a first position, where a distance between the first limiting member and the second limiting member retracted to the first position is greater than or equal to a width of the separator.

In this embodiment of this application, after the first electrode plate unit moves to the target stacking position, the first limiting member and the second limiting member retract to the first position. The distance between the first limiting member and the second limiting member retracted to the first position is equal to the width of the separator in the first direction, or slightly greater than the width of the separator in the first direction, so as to prevent the first limiting member and the second limiting member from jamming the separator, which otherwise makes the separator unable to lay flat.

In an embodiment of this application, the carrying plate is provided with suction holes; and
the first control module includes:
a first control submodule configured to control the carrying plate to extend from an initial position to a receiving position so that the first electrode plate unit is stacked onto the carrying plate when the first electrode plate unit drops under a condition that the first electrode plate unit is the first stacked electrode plate unit;
a second control submodule configured to control the limiting assembly to push the first electrode plate unit to move to the target stacking position; and
a third control submodule configured to control the suction holes to conduct suction to adsorb the first electrode plate unit covering the suction holes.

In this embodiment of this application, when the first electrode plate unit is the first stacked electrode plate unit and the first electrode plate unit drops, the carrying plate extends from the initial position to the receiving position, so that the first electrode plate unit is stacked onto support members of the carrying plate, and after the limiting assembly pushes the first electrode plate unit to move to the target stacking position, the suction holes on the support members are controlled to conduct suction to adsorb the first electrode plate unit. In this way, subsequently, after the second electrode plate unit drops on the first electrode plate unit, when the limiting assembly pushes the first electrode plate unit and the second electrode plate unit to move, the first electrode plate unit will not move due to the adsorption of the suction holes, and the second electrode plate unit will move with the limiting assembly due to no adsorption of the suction holes, thereby aligning the second electrode plate unit with the first electrode plate unit and achieving the purpose of electrode plate shaping.

In an embodiment of this application, the battery stacking apparatus further includes:
a fourth control module configured to: when the number of electrode plate units stacked on the carrying plate is a preset threshold, cut off a connection between a third electrode plate unit and other electrode plate units, where the third electrode plate unit is the last electrode plate unit stacked onto the carrying plate, and the other electrode plate units refer to electrode plate units of the anode strip that are not stacked onto the carrying plate; and
a fifth control module configured to control the suction holes to stop conducting suction and control the carrying plate to retract to the initial position, so that the electrode plate units stacked on the carrying plate drop onto a stacking platform below the carrying plate.

In this embodiment, when the number of electrode plate units stacked on the carrying plate is the preset threshold, the connection between the third electrode plate unit and other electrode plate units is cut off; and the suction holes are controlled to stop conducting suction, and the carrying plate is controlled to retract to the initial position, so that the electrode plate units stacked on the carrying plate drop onto the stacking platform below the carrying plate. In this way, a group of neatly stacked electrode plate units are obtained for use in subsequent battery cell manufacturing processes.

According to a third aspect, an embodiment of this application provides a battery stacking system, the battery stacking system including a battery stacking device and a controller, where the battery stacking device includes a stacking mechanism for stacking an anode strip, the stacking mechanism includes a carrying plate and a limiting assembly capable of moving on the carrying plate, a plurality of cathode plates are spaced apart on the anode strip, the anode strip is folded at spacings between adjacent cathode plates as folding positions to obtain a plurality of electrode plate units, each electrode plate unit includes one cathode plate, each electrode plate unit is stacked onto the carrying plate of the stacking mechanism, and the controller is configured to:
obtain a target offset distance of a first electrode plate unit of the anode strip relative to a first reference position, where the first reference position is a reference position set for the anode strip during a strip transportation stage;
obtain a target stacking position of the first electrode plate unit based on the target offset distance and a second reference position, where the second reference position is a reference position set when the electrode plate units of the anode strip are stacked on the carrying plate; and
control the limiting assembly to push the first electrode plate unit to move to the target stacking position when the first electrode plate unit is stacked onto the carrying plate under a condition that the first electrode plate unit is the first stacked electrode plate unit.

In this embodiment of this application, when the first electrode plate unit is stacked onto the carrying plate, the limiting assembly is controlled to push the first electrode plate unit to move to the target stacking position, so as to adjust the position where the first electrode plate unit is stacked onto the carrying plate, allowing for more accurate stacking position of the first stacked electrode plate unit, and since the stacking position of the first electrode plate unit is no longer a random position after dropping, the tail flicking problem existing in the stacking of the first electrode plate can be effectively solved.

In an embodiment of this application, the controller is further configured to: in a case that a second electrode plate unit of the anode strip is stacked on the first electrode plate unit, control the limiting assembly to push the second electrode plate unit to be aligned with the first electrode plate unit.

In this embodiment of this application, after the second electrode plate unit is stacked on the first electrode plate unit, the limiting assembly is controlled to push the electrode plate units to move to the target stacking position, and during the pushing process, under the action of the limiting assembly, the second electrode plate unit can be pushed to be aligned with the first electrode plate unit on the carrying plate, achieving the purpose of electrode plate shaping.

In an embodiment of this application, the anode strip includes an anode plate and separators disposed on both sides of the anode plate, a width of the separator in a first direction being greater than a width of the anode plate in the first direction, and the first direction being parallel to a crease formed by the folding; and
the target offset distance is an offset distance of an edge of the anode plate relative to the first reference position.

In this embodiment of this application, during determining of the target offset distance, an offset distance of an edge of the anode strip relative to the first reference position is determined with the first reference position as a reference, so that the target offset distance can be used as the offset distance of the stacking position of the first electrode plate unit relative to the second reference position when the first electrode plate unit is stacked onto the carrying plate, so as to accurately calculate the stacking position of the first electrode plate unit, achieve precise shaping of the first electrode plate, and effectively solve the tail flicking problem existing for the first electrode plate.

In an embodiment of this application, the battery stacking device further includes a first detection unit and a second detection unit; and
the controller is further configured to: obtain a first offset distance obtained through detection by the first detection unit and a second offset distance obtained through detection by the second detection unit, where the first offset distance is a distance between an edge of the anode plate and an edge of the separator in the first electrode plate unit, and the second offset distance is a second offset distance of the edge of the separator in the first electrode plate unit relative to the first reference position; and
use a sum of the first offset distance and the second offset distance as the target offset distance.

In this embodiment of this application, the first offset distance and the second offset distance are obtained through the two detection units respectively, thereby obtaining the target offset distance of the edge of the anode plate in the first electrode plate unit relative to the first reference position, so as to facilitate subsequent calculation of the target stacking position according to the target offset distance, thereby improving the accuracy of the stacking position of the first electrode plate.

In an embodiment of this application, the controller is further configured to offset the target offset distance on the basis of the second reference position to obtain the target stacking position, where the target stacking position is a stacking area, and a width of the stacking area in the first direction is determined based on a width of the anode plate in the first direction.

In this embodiment of this application, the target offset distance is offset on the basis of the second reference position to obtain the target stacking position, which facilitates subsequent adjustment of the position where the first electrode plate unit is stacked onto the carrying plate when the first electrode plate unit is stacked onto the carrying plate, allowing for more accurate stacking position of the first stacked electrode plate unit, and effectively solving the tail flicking problem existing in the stacking of the first electrode plate.

In an embodiment of this application, the limiting assembly includes a first limiting member and a second limiting member disposed opposite each other in the first direction; and
the controller is further configured to: control the first limiting member and the second limiting member to push the first electrode plate unit to move to the target stacking position; and
control the first limiting member and the second limiting member to separately retract to a first position, where a distance between the first limiting member and the second limiting member retracted to the first position is greater than or equal to a width of the separator.

In this embodiment of this application, after the first electrode plate unit moves to the target stacking position, the first limiting member and the second limiting member retract to the first position. The distance between the first limiting member and the second limiting member retracted to the first position is equal to the width of the separator in the first direction, or slightly greater than the width of the separator in the first direction, so as to prevent the first limiting member and the second limiting member from jamming the separator, which otherwise makes the separator unable to lay flat.

In an embodiment of this application, the carrying plate is provided with suction holes; and
the controller is further configured to control the carrying plate to extend from an initial position to a receiving position so that the first electrode plate unit is stacked onto the carrying plate when the first electrode plate unit drops under a condition that the first electrode plate unit is the first stacked electrode plate unit;
control the limiting assembly to push the first electrode plate unit to move to the target stacking position; and
control the suction holes to conduct suction to adsorb the first electrode plate unit covering the suction holes.

In this embodiment of this application, when the first electrode plate unit is the first stacked electrode plate unit and the first electrode plate unit drops, the carrying plate extends from the initial position to the receiving position, so that the first electrode plate unit is stacked onto support members of the carrying plate, and after the limiting assembly pushes the first electrode plate unit to move to the target stacking position, the suction holes on the support members are controlled to conduct suction to adsorb the first electrode plate unit. In this way, subsequently, after the second electrode plate unit drops on the first electrode plate unit, when the limiting assembly pushes the first electrode plate unit and the second electrode plate unit to move, the first electrode plate unit will not move due to the adsorption of the suction holes, and the second electrode plate unit will move with the limiting assembly due to no adsorption of the suction holes, thereby aligning the second electrode plate unit with the first electrode plate unit and achieving the purpose of electrode plate shaping.

In an embodiment of this application, the controller is further configured to: when the number of electrode plate units stacked on the carrying plate is a preset threshold, cut off a connection between a third electrode plate unit and other electrode plate units, where the third electrode plate unit is the last electrode plate unit stacked onto the carrying plate, and the other electrode plate units refer to electrode plate units of the anode strip that are not stacked onto the carrying plate; and
control the suction holes to stop conducting suction and control the carrying plate to retract to the initial position, so that the electrode plate units stacked on the carrying plate drop onto a stacking platform below the carrying plate.

In this embodiment, when the number of electrode plate units stacked on the carrying plate is the preset threshold, the connection between the third electrode plate unit and other electrode plate units is cut off; and the suction holes are controlled to stop conducting suction, and the carrying plate is controlled to retract to the initial position, so that the electrode plate units stacked on the carrying plate drop onto the stacking platform below the carrying plate. In this way, a group of neatly stacked electrode plate units are obtained for use in subsequent battery cell manufacturing processes.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

The following describes features, advantages, and technical effects of the example embodiments of this application with reference to the accompanying drawings.
FIG. 1 is a schematic flowchart of a battery stacking method according to an embodiment of this application;
FIG. 2 is a partial schematic structural diagram of a battery stacking device according to an embodiment of this application;
FIG. 3 is a partial schematic structural diagram of a battery stacking device according to an embodiment of this application;
FIG. 4 is a schematic structural diagram of a first limiting member according to an embodiment of this application;
FIG. 5 is a schematic structural diagram of a second limiting member according to an embodiment of this application;
FIG. 6 is a schematic structural diagram of a carrying plate according to an embodiment of this application;
FIG. 7 is a schematic structural diagram of a battery stacking apparatus according to an embodiment of this application; and
FIG. 8 is a schematic structural diagram of a battery stacking system according to an embodiment of this application.

### Detailed description of reference signs:

1. anode strip; 2. carrying plate; 3. cathode plate; 4. electrode plate unit; 5. first detection unit; 6. second detection unit; 7. limiting plate; 8. first limiting member; 9. second limiting member; 10. first protrusion; 11. second protrusion; 12. support member; 13. first edge; 14. second edge; X. first direction; Y. second direction; and F. strip transportation direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

In production of battery cells, cathode plates are spaced apart on an anode strip, which is folded at spacings between adjacent cathode plates as folding positions. Since each electrode plate unit (each electrode plate unit includes one cathode plate) is stacked in a free stacking manner, the stacking positions of the electrode plate units may vary during stacking, especially during stacking of the first electrode plate, tail flicking occurs, that is, the stacking position of the first electrode plate is highly random, which leads to poor accuracy of the stacking position. Moreover, greater randomness of the stacking positions of some electrode plate units at the beginning of stacking may also lead to misalignment of the electrode plate units.

In view of the foregoing problems, the embodiments of this application provide a battery stacking method, apparatus, and system. When a first electrode plate unit is stacked onto a carrying plate, the first electrode plate unit is moved to a target stacking position, allowing for more accurate stacking position of the first stacked electrode plate unit, and effectively solving the tail flicking problem existing for the first electrode plate. Further, subsequently, after each electrode plate unit is stacked, the stacked electrode plate units are uniformly adjusted to move several electrode plate units to the target stacking position, which can align a plurality of electrode plate units.

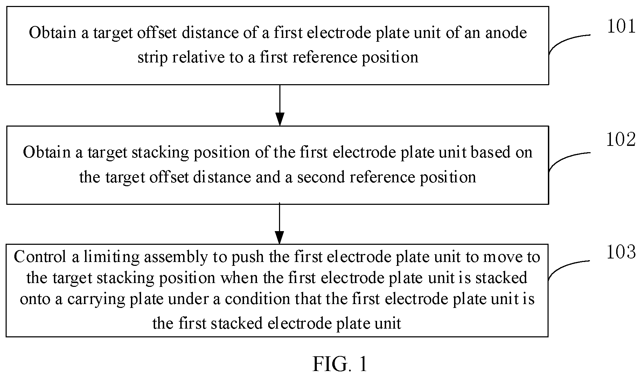

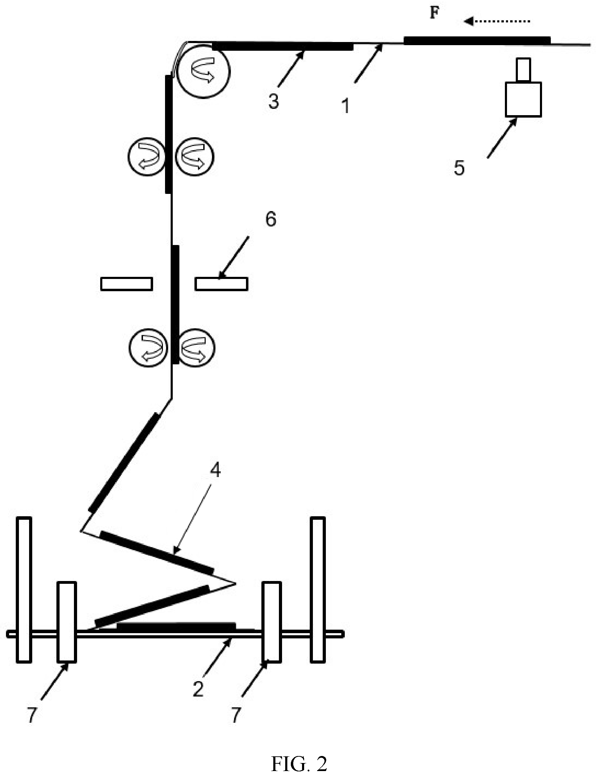

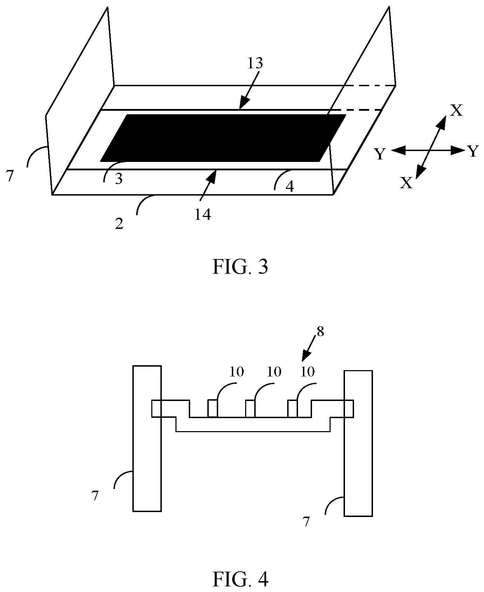

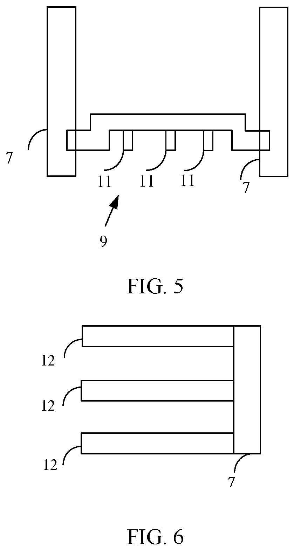

The following describes the battery stacking method, apparatus, and system provided in the embodiments of this application. FIG. 1 is a schematic flowchart of a battery stacking method according to an embodiment of this application, and FIG. 2 shows a battery stacking device according to an embodiment of this application. The battery stacking device is used for stacking an anode strip 1, the battery stacking device includes a stacking mechanism, the stacking mechanism includes a carrying plate 2 and a limiting assembly (as shown in FIGs. 4 and 5) capable of moving on the carrying plate 2, a plurality of cathode plates 3 are spaced apart on the anode strip 1, the anode strip 1 is folded at spacings between adjacent cathode plates 3 as folding positions to obtain a plurality of electrode plate units 4, each electrode plate unit 4 includes one cathode plate 3, and each electrode plate unit 4 is stacked onto the carrying plate 2 of the stacking mechanism.

The battery stacking method provided in this application is applied to a battery stacking device. As shown in FIG. 1, the battery stacking method provided in this application includes the following steps 101 to 103.

Step 101. Obtain a target offset distance of a first electrode plate unit of an anode strip relative to a first reference position, where the first reference position is a reference position set for the anode strip during a strip transportation stage.

Referring to FIG. 2, a plurality of cathode plates 3 are spaced apart on the anode strip 1, and an area (the area including one cathode plate) between every two adjacent spacings of the anode strip 1 is regarded as one electrode plate unit 4. For ease of description, the first electrode plate unit is used as an example for description in this embodiment of this application. The anode strip 1 includes an anode plate and separators disposed on both sides of the anode plate. It should be noted that edges of the two separators may be aligned with each other.

The first reference position is pre-calibrated during the strip transportation stage of the anode strip 1, and subsequently, during determining of the position of the first electrode plate unit, the first reference position is used as a reference to obtain the target offset distance of the first electrode plate unit relative to the first reference position. For example, the target offset distance is an offset distance of an edge of the anode plate of the first electrode plate unit relative to the first reference position.

Step 102. Obtain a target stacking position of the first electrode plate unit based on the target offset distance and a second reference position, where the second reference position is a reference position set when electrode plate units of the anode strip are stacked on the carrying plate.

The second reference position is pre-calibrated. For example, when electrode plate units of the anode strip are continuously stacked, the first electrode plate stacked on the carrying plate has a tail flicking problem, and the stacking position of the first electrode plate on the carrying plate is relatively random. As more electrode plate units are subsequently stacked, a position where a new electrode plate unit drops on the carrying plate (indirectly drops on the carrying plate, that is, actually drops on other electrode plate units already stacked on the carrying plate) changes less and is relatively fixed. In this case, a subsequently stacked electrode plate units will be aligned with a previously stacked electrode plate unit.

During calibration of the second reference position, the reference position of the anode strip participating in the calibration during the strip transportation stage is adjusted to the first reference position. For example, a position of an edge of an anode plate of the anode strip participating in the calibration is used as the first reference position, a plurality of electrode plate units are continuously stacked, and the stacking position of the electrode plate units (it should be noted that during the continuous stacking process of a plurality of electrode plate units, a latter electrode plate unit is stacked on a former electrode plate unit, and the actual stacking position of each electrode plate unit is different; and for ease of description, in this embodiment of this application, the stacking position of the electrode plate unit may be understood as a vertical projection of the actual stacking position of the electrode plate unit on the carrying plate) changes less and tends to be stable, the stacking position with less change is used as the second reference position.

The target stacking position may be obtained by offsetting the target offset distance on the basis of the second reference position. For example, the second reference position may be a position where an area is located, then a center point of the area is offset by the target offset distance to obtain a center point of the target stacking position, and the target stacking position is determined based on the new center point. The second reference position may alternatively be a position where a central axis of a stacking area is located, then the central axis is offset by the target offset distance to obtain a central axis of the target stacking position, and the target stacking position is determined based on the new central axis.

Step 103. Control a limiting assembly to push the first electrode plate unit to move to the target stacking position when the first electrode plate unit is stacked onto the carrying plate under a condition that the first electrode plate unit is the first stacked electrode plate unit.

As shown in FIG. 3, X is a first direction, Y is a second direction, two limiting plates 7 disposed opposite each other are provided in the second direction, and a distance between the two limiting plates 7 is equal to or slightly greater than a length of an electrode plate unit in the direction Y. When the first electrode plate unit drops on the carrying plate 2, the first electrode plate unit is hardly displaced in the direction Y due to the limitation of the two limiting plates 7, but may be displaced in the direction X since there is no limiting plate 7 in the direction X. In this embodiment of this application, the limiting assembly may be provided in the direction X to push the first electrode plate unit to move to the target stacking position.

In this embodiment, when the first electrode plate unit is stacked onto the carrying plate, the limiting assembly is controlled to push the first electrode plate unit to move to the target stacking position, so as to adjust the position where the first electrode plate unit is stacked onto the carrying plate, allowing for more accurate stacking position of the first stacked electrode plate unit, and since the stacking position of the first electrode plate unit is no longer a random position after dropping, the tail flicking problem existing in the stacking of the first electrode plate can be effectively solved.

In an embodiment of this application, after the controlling the limiting assembly to push the first electrode plate unit to move to the target stacking position, the method further includes:
in a case that a second electrode plate unit of the anode strip is stacked on the first electrode plate unit, controlling the limiting assembly to push the second electrode plate unit to be aligned with the first electrode plate unit.

In this embodiment, the second electrode plate unit may be adjacent to the first electrode plate unit, in which case, when stacked on the first electrode plate unit, the second electrode plate unit is in direct contact with the first electrode plate unit; or the second electrode plate unit may not be adjacent to the first electrode plate unit, in which case, when the second electrode plate unit is stacked on the first electrode plate unit, one or more electrode plate units are present between the first electrode plate unit and the second electrode plate unit, and the second electrode plate unit is in indirect contact with the first electrode plate unit.

As shown in FIG. 3, when each electrode plate unit 4 drops on the carrying plate 2, due to the limitation of the two limiting plates 7, the position offset of the electrode plate unit 4 in the direction Y is small, that is, the alignment degree of each electrode plate unit 4 in the direction Y meets the requirements. However, since there is no limiting plate 7 in the direction X, each electrode plate unit 4 may have an offset in the direction X during stacking, resulting in the electrode plate units 4 not aligning. In this embodiment of this application, a limiting assembly may be provided in the direction X to push the electrode plate units 4 to be aligned with each other. For example, a first limiting member 8 (as shown in FIG. 4) and a second limiting member 9 (as shown in FIG. 5) that are capable of moving along the direction X are provided in the direction X. The first limiting member 8 and the second limiting member 9 are disposed opposite each other, and the stacked electrode plate units 4 are located between the first limiting member 8 and the second limiting member 9. After the second electrode plate unit is stacked on the first electrode plate unit, the first limiting member 8 and the second limiting member 9 are controlled to move toward the electrode plate units, pushing the two electrode plate units 4 to move to the target stacking position. During the pushing process, under the action of the first limiting member 8 and the second limiting member 9, the second electrode plate unit can be pushed to be aligned with the existing first electrode plate unit on the carrying plate 2, achieving the purpose of electrode plate shaping.

In another embodiment of this application, the anode strip includes an anode plate and separators disposed on both sides of the anode plate, a width of the separator in the first direction being greater than a width of the anode plate in the first direction, and the first direction being parallel to a crease formed by the folding; and the target offset distance is an offset distance of an edge of the anode plate relative to the first reference position.

The first reference position is determined through pre-calibration. During determining of the target offset distance, the edge of the anode plate relative to the first reference position is determined with the first reference position as a reference, so that the target offset distance can be used as the offset distance of the stacking position of the first electrode plate unit relative to the second reference position when the first electrode plate unit is stacked onto the carrying plate, so as to accurately calculate the stacking position of the first electrode plate unit, achieve precise shaping of the first electrode plate, and effectively solve the tail flicking problem existing for the first electrode plate.

In an embodiment of this application, a method for determining a target offset distance is provided. The battery stacking device further includes a first detection unit and a second detection unit; and
the obtaining the target offset distance of the first electrode plate unit of the anode strip relative to the first reference position includes:
obtaining a first offset distance obtained through detection by the first detection unit and a second offset distance obtained through detection by the second detection unit, where the first offset distance is a distance between an edge of the anode plate and an edge of the separator in the first electrode plate unit, and the second offset distance is a second offset distance of the edge of the separator in the first electrode plate unit relative to the first reference position; and
using a sum of the first offset distance and the second offset distance as the target offset distance.

In the foregoing description, as shown in FIG. 2, the first detection unit 5 may be a camera, and the anode strip is photographed by the camera to obtain the distance between the edge of the anode strip 1 and the edge of the separator in the first electrode plate unit. It should be noted that the width of the separator in the first direction is greater than the width of the anode strip in the first direction, and the anode plate in the first direction may be regarded as being centered on the separator. In other words, the distances between the edges on two sides of the anode plate in the first direction (as shown in FIG. 3, including the first edge 13 and the second edge 14) and the edges of the separator on the corresponding sides are the same. The first offset distance in this embodiment may be the distance between the edge of the anode plate and the edge of the separator on any side in the first direction.

If the first reference position in the first direction is calibrated with a first side edge of the separator as the reference position, then during determining of the second offset distance, a distance of the first side edge of the separator in the first electrode plate unit in the first direction relative to the first reference position is detected to obtain the second offset distance.

As shown in FIG. 2, the second detection unit 6 may be an opposite-emission strip detection assembly, which cannot penetrate the anode strip and can penetrate only the separator. In view of this, in this embodiment of this application, the offset distance of the separator edge in the first electrode plate unit relative to the first reference position (that is, the second offset distance) is detected, the offset distance between the edge of the separator and the edge of the anode plate in the first electrode plate unit (that is, the first offset distance) is detected, and the sum of the first offset distance and the second offset distance is calculated, therefore, the distance by which the anode plate is offset from the first reference position, that is, the target offset distance, can be indirectly calculated. This method of calculating the target offset distance is relatively simple and can reduce the complexity of calculation.

In this embodiment, the first offset distance and the second offset distance are obtained through the two detection units respectively, thereby obtaining the target offset distance of the edge of the anode plate in the first electrode plate unit relative to the first reference position, so as to facilitate subsequent calculation of the target stacking position according to the target offset distance, thereby improving the accuracy of the stacking position of the first electrode plate.

In an embodiment of this application, the obtaining the target stacking position of the first electrode plate unit based on the target offset distance and the second reference position includes:
offsetting the target offset distance on the basis of the second reference position to obtain the target stacking position, where the target stacking position is a stacking area, and a width of the stacking area in the first direction is determined based on a width of the anode plate in the first direction.

For example, if the second reference position is a position where an area is located, a center point of the area is offset by the target offset distance in the first direction to obtain the target stacking position. It should be noted that the target offset distance may be a positive value or a negative value, which may be implemented by defining a positive direction in the first direction. Details are not described herein.

For example, the width of the stacking area in the first direction may be equal to the width of the anode plate in the first direction, or slightly greater than the width of the anode plate in the first direction.

In this embodiment, the target offset distance is offset on the basis of the second reference position to obtain the target stacking position, which facilitates subsequent adjustment of the position where the first electrode plate unit is stacked onto the carrying plate when the first electrode plate unit is stacked onto the carrying plate, allowing for more accurate stacking position of the first stacked electrode plate unit, and effectively solving the tail flicking problem existing in the stacking of the first electrode plate.

As more electrode plate units are subsequently stacked, a position where a new electrode plate unit drops on the carrying plate (indirectly drops on the carrying plate, that is, actually drops on other electrode plate units already stacked on the carrying plate) changes less and is relatively fixed. In this case, a subsequently stacked electrode plate units will be aligned with a previously stacked electrode plate unit.

In another embodiment of this application, the limiting assembly includes a first limiting member and a second limiting member disposed opposite each other in the first direction;
the controlling the limiting assembly to push the first electrode plate unit to move to the target stacking position includes:
controlling the first limiting member and the second limiting member to push the first electrode plate unit to move to the target stacking position; and
after the controlling the limiting assembly to push the first electrode plate unit to move to the target stacking position, the method further includes:
   controlling the first limiting member and the second limiting member to separately retract to a first position, where a distance between the first limiting member and the second limiting member retracted to the first position is greater than or equal to a width of the separator in the first direction.

Specifically, the first limiting member and the second limiting member are disposed opposite each other, both the first limiting member and the second limiting member can move on the carrying plate along the first direction, and the first electrode plate unit is located between the first limiting member and the second limiting member.

The battery stacking device further includes a first drive motor and a second drive motor. As shown in FIGs. 4 and 5, the first limiting member 8 is provided with first protrusions 10, and the second limiting member 9 is provided with second protrusions 11; the first drive motor (not shown in the figure) is connected to the first protrusions 10 and drives the first protrusions 10 to move, thereby driving the first limiting member 8 to move; and the second drive motor (not shown in the figure) is connected to the second protrusions 11 and drives the second protrusions 11 to move, thereby driving the second limiting member 9 to move.

When moving, the first limiting member 8 and the second limiting member 9 can push the first electrode plate unit to move. For example, the first limiting member 8 and the second limiting member 9 clamp the first electrode plate to move to the target stacking position. After the first electrode plate unit moves to the target stacking position, the first limiting member 8 and the second limiting member 9 retract to the first position. The distance between the first limiting member 8 and the second limiting member 9 retracted to the first position is equal to the width of the separator in the first direction, or slightly greater than the width of the separator in the first direction, so as to prevent the first limiting member 8 and the second limiting member 9 from jamming the separator, which otherwise makes the separator unable to lay flat.

In another embodiment of this application, the carrying plate is provided with suction holes; and
the controlling the limiting assembly to push the first electrode plate unit to move to the target stacking position when the first electrode plate unit is stacked onto the carrying plate under a condition that the first electrode plate unit is the first stacked electrode plate unit includes:
controlling the carrying plate to extend from an initial position to a receiving position so that the first electrode plate unit is stacked onto the carrying plate when the first electrode plate unit drops under a condition that the first electrode plate unit is the first stacked electrode plate unit;
controlling the limiting assembly to push the first electrode plate unit to move to the target stacking position; and
controlling the suction holes to conduct suction to adsorb the first electrode plate unit covering the suction holes.

Specifically, FIG. 6 is a schematic structural diagram of a carrying plate according to an embodiment of this application. As shown in FIG. 6, the carrying plate 2 includes a plurality of support members 12 provided on the limiting plate 7 on one side. Three support members 12 are shown in FIG. 6, and the three support members 12 are disposed in parallel. The support members 12 are provided with suction holes. When not in use, the carrying plate 2 is retracted to the initial position. When in use, the carrying plate 2 extends to the receiving position. For example, the receiving position is located on the limiting plate 7 on the other side. Specifically, grooves are provided on a side, of the limiting plate 7 on the other side, opposite to the opposite side limiting plate 7, and the support members extend into the grooves.

When the first electrode plate unit is the first stacked electrode plate unit and the first electrode plate unit drops, the carrying plate extends from the initial position to the receiving position, so that the first electrode plate unit is stacked onto the support members of the carrying plate, and after the limiting assembly pushes the first electrode plate unit to move to the target stacking position, the suction holes on the support members are controlled to conduct suction to adsorb the first electrode plate unit. In this way, subsequently, after the second electrode plate unit drops on the first electrode plate unit, when the limiting assembly pushes the first electrode plate unit and the second electrode plate unit to move, the first electrode plate unit will not move due to the adsorption of the suction holes, and the second electrode plate unit will move with the limiting assembly due to no adsorption of the suction holes, thereby aligning the second electrode plate unit with the first electrode plate unit and achieving the purpose of electrode plate shaping.

It should be noted that as more electrode plate units drop onto the carrying plate, the stacking position of the electrode plate units tends to be stable, so that the electrode plate units dropping later will be aligned with the electrode plate units dropping earlier. In this case, it is no longer necessary to use the limiting assembly to push the electrode plate units on the carrying plate. For example, when the number of electrode plate units on the carrying plate is 10 or 15, the use of the limiting assembly to push the electrode plate units on the carrying plate may be stopped, which can save the power consumption for driving the limiting assembly and reduce the wear of the movement of the limiting assembly.

In another embodiment of this application, the method further includes:
when the number of electrode plate units stacked on the carrying plate is a preset threshold, cutting off a connection between a third electrode plate unit and other electrode plate units, where the third electrode plate unit is the last electrode plate unit stacked onto the carrying plate, and the other electrode plate units refer to electrode plate units of the anode strip that are not stacked onto the carrying plate; and
controlling the suction holes to stop conducting suction and controlling the carrying plate to retract to the initial position, so that the electrode plate units stacked on the carrying plate drop onto a stacking platform below the carrying plate.

The preset threshold may be set based on actual conditions, for example, 40, which is not limited herein. When the number of electrode plate units stacked on the carrying plate is 40, the connection between the third electrode plate unit and the other electrode plate units is cut off, the suction holes are controlled to stop conducting suction, and the carrying plate is retracted to the initial position, so that the 40 electrode plate units drop onto the stacking platform below the carrying plate to obtain a group of electrode plate units for use in subsequent battery cell manufacturing processes.

In this embodiment, when the number of electrode plate units stacked on the carrying plate is the preset threshold, the connection between the third electrode plate unit and other electrode plate units is cut off; and the suction holes are controlled to stop conducting suction, and the carrying plate is controlled to retract to the initial position, so that the electrode plate units stacked on the carrying plate drop onto the stacking platform below the carrying plate. In this way, a group of neatly stacked electrode plate units are obtained for use in subsequent battery cell manufacturing processes.

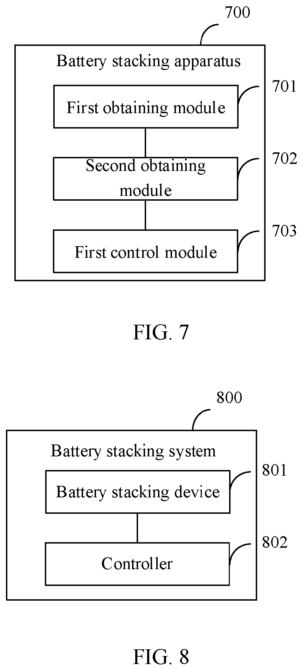

Refer to FIG. 7, which is a schematic structural diagram of a battery stacking apparatus according to an embodiment of this application. As shown in FIG. 7, the battery stacking apparatus 700 is applied to a battery stacking device, the battery stacking device includes a stacking mechanism for stacking an anode strip, the stacking mechanism includes a carrying plate and a limiting assembly capable of moving on the carrying plate, a plurality of cathode plates are spaced apart on the anode strip, the anode strip is folded at spacings between adjacent cathode plates as folding positions to obtain a plurality of electrode plate units, each electrode plate unit includes one cathode plate, each electrode plate unit is stacked onto the carrying plate of the stacking mechanism, and the battery stacking apparatus 700 includes:
a first obtaining module 701 configured to obtain a target offset distance of a first electrode plate unit of the anode strip relative to a first reference position, where the first reference position is a reference position set for the anode strip during a strip transportation stage;
a second obtaining module 702 configured to obtain a target stacking position of the first electrode plate unit based on the target offset distance and a second reference position, where the second reference position is a reference position set when electrode plate units of the anode strip are stacked on the carrying plate; and
a first control module 703 configured to control the limiting assembly to push the first electrode plate unit to move to the target stacking position when the first electrode plate unit is stacked onto the carrying plate under a condition that the first electrode plate unit is the first stacked electrode plate unit.

In this embodiment of this application, when the first electrode plate unit is stacked onto the carrying plate, the limiting assembly is controlled to push the first electrode plate unit to move to the target stacking position, so as to adjust the position where the first electrode plate unit is stacked onto the carrying plate, allowing for more accurate stacking position of the first stacked electrode plate unit, and since the stacking position of the first electrode plate unit is no longer a random position after dropping, the tail flicking problem existing in the stacking of the first electrode plate can be effectively solved.

In an embodiment of this application, the battery stacking apparatus 700 further includes:
a second control module configured to: in a case that a second electrode plate unit of the anode strip is stacked on the first electrode plate unit, control the limiting assembly to push the second electrode plate unit to be aligned with the first electrode plate unit.

In this embodiment of this application, after the second electrode plate unit is stacked on the first electrode plate unit, the limiting assembly is controlled to push the electrode plate units to move to the target stacking position, and during the pushing process, under the action of the limiting assembly, the second electrode plate unit can be pushed to be aligned with the first electrode plate unit on the carrying plate, achieving the purpose of electrode plate shaping.

In an embodiment of this application, the anode strip includes an anode plate and separators disposed on both sides of the anode plate, a width of the separator in the first direction being greater than a width of the anode plate in the first direction, and the first direction being parallel to a crease formed by the folding; and
the target offset distance is an offset distance of an edge of the anode plate relative to the first reference position.

In this embodiment of this application, during determining of the target offset distance, the edge of the anode plate relative to the first reference position is determined with the first reference position as a reference, so that the target offset distance can be used as the offset distance of the stacking position of the first electrode plate unit relative to the second reference position when the first electrode plate unit is stacked onto the carrying plate, so as to accurately calculate the stacking position of the first electrode plate unit, achieve precise shaping of the first electrode plate, and effectively solve the tail flicking problem existing for the first electrode plate.

In an embodiment of this application, the battery stacking device further includes a first detection unit and a second detection unit; and
the first obtaining module 701 includes:
an obtaining submodule configured to obtain a first offset distance obtained through detection by the first detection unit and a second offset distance obtained through detection by the second detection unit, where the first offset distance is a distance between an edge of the anode plate and an edge of the separator in the first electrode plate unit, and the second offset distance is a second offset distance of the edge of the separator in the first electrode plate unit relative to the first reference position; and
a determining submodule configured to use a sum of the first offset distance and the second offset distance as the target offset distance.

In this embodiment of this application, the first offset distance and the second offset distance are obtained through the two detection units respectively, thereby obtaining the target offset distance of the edge of the anode plate in the first electrode plate unit relative to the first reference position, so as to facilitate subsequent calculation of the target stacking position according to the target offset distance, thereby improving the accuracy of the stacking position of the first electrode plate.

In an embodiment of this application, the second obtaining module 702 is specifically configured to offset the target offset distance on the basis of the second reference position to obtain the target stacking position, where the target stacking position is a stacking area, and a width of the stacking area in the first direction is determined based on a width of the anode plate in the first direction.

In this embodiment of this application, the target offset distance is offset on the basis of the second reference position to obtain the target stacking position, which facilitates subsequent adjustment of the position where the first electrode plate unit is stacked onto the carrying plate when the first electrode plate unit is stacked onto the carrying plate, allowing for more accurate stacking position of the first stacked electrode plate unit, and effectively solving the tail flicking problem existing in the stacking of the first electrode plate.

In an embodiment of this application, the limiting assembly includes a first limiting member and a second limiting member disposed opposite each other in the first direction;
the first control module 703 is specifically configured to control the first limiting member and the second limiting member to push the first electrode plate unit to move to the target stacking position; and
the battery stacking apparatus 700 further includes:
   a third control module configured to control the first limiting member and the second limiting member to retract to a first position respectively, where a distance between the first limiting member and the second limiting member retracted to the first position is greater than or equal to a width of the separator.

In this embodiment of this application, after the first electrode plate unit moves to the target stacking position, the first limiting member and the second limiting member retract to the first position. The distance between the first limiting member and the second limiting member retracted to the first position is equal to the width of the separator in the first direction, or slightly greater than the width of the separator in the first direction, so as to prevent the first limiting member and the second limiting member from jamming the separator, which otherwise makes the separator unable to lay flat.

In an embodiment of this application, the carrying plate is provided with suction holes; and
the first control module 703 includes:
a first control submodule configured to control the carrying plate to extend from an initial position to a receiving position so that the first electrode plate unit is stacked onto the carrying plate when the first electrode plate unit drops under a condition that the first electrode plate unit is the first stacked electrode plate unit;
a second control submodule configured to control the limiting assembly to push the first electrode plate unit to move to the target stacking position; and
a third control submodule configured to control the suction holes to conduct suction to adsorb the first electrode plate unit covering the suction holes.

In this embodiment of this application, when the first electrode plate unit is the first stacked electrode plate unit and the first electrode plate unit drops, the carrying plate extends from the initial position to the receiving position, so that the first electrode plate unit is stacked onto the support members of the carrying plate, and after the limiting assembly pushes the first electrode plate unit to move to the target stacking position, the suction holes on the support members are controlled to conduct suction to adsorb the first electrode plate unit. In this way, subsequently, after the second electrode plate unit drops on the first electrode plate unit, when the limiting assembly pushes the first electrode plate unit and the second electrode plate unit to move, the first electrode plate unit will not move due to the adsorption of the suction holes, and the second electrode plate unit will move with the limiting assembly due to no adsorption of the suction holes, thereby aligning the second electrode plate unit with the first electrode plate unit and achieving the purpose of electrode plate shaping.

In an embodiment of this application, the battery stacking apparatus 700 further includes:
a fourth control module configured to: when the number of electrode plate units stacked on the carrying plate is a preset threshold, cut off a connection between a third electrode plate unit and other electrode plate units, where the third electrode plate unit is the last electrode plate unit stacked onto the carrying plate, and the other electrode plate units refer to electrode plate units of the anode strip that are not stacked onto the carrying plate; and
a fifth control module configured to control the suction holes to stop conducting suction and control the carrying plate to retract to the initial position, so that the electrode plate units stacked on the carrying plate drop onto a stacking platform below the carrying plate.

In this embodiment, when the number of electrode plate units stacked on the carrying plate is the preset threshold, the connection between the third electrode plate unit and other electrode plate units is cut off; and the suction holes are controlled to stop conducting suction, and the carrying plate is controlled to retract to the initial position, so that the electrode plate units stacked on the carrying plate drop onto the stacking platform below the carrying plate. In this way, a group of neatly stacked electrode plate units are obtained for use in subsequent battery cell manufacturing processes.

FIG. 8 shows a battery stacking system according to an embodiment of this application. As shown in FIG. 8, the battery stacking system 800 includes a battery stacking device 801 and a controller 802, where the battery stacking device 801 includes a stacking mechanism for stacking an anode strip, the stacking mechanism includes a carrying plate and a limiting assembly capable of moving on the carrying plate, a plurality of cathode plates are spaced apart on the anode strip, the anode strip is folded at spacings between adjacent cathode plates as folding positions to obtain a plurality of electrode plate units, each electrode plate unit includes one cathode plate, each electrode plate unit is stacked onto the carrying plate of the stacking mechanism, and the controller 802 is configured to:
obtain a target offset distance of a first electrode plate unit of the anode strip relative to a first reference position, where the first reference position is a reference position set for the anode strip during a strip transportation stage;
obtain a target stacking position of the first electrode plate unit based on the target offset distance and a second reference position, where the second reference position is a reference position set when the electrode plate units of the anode strip are stacked on the carrying plate; and
control the limiting assembly to push the first electrode plate unit to move to the target stacking position when the first electrode plate unit is stacked onto the carrying plate under a condition that the first electrode plate unit is the first stacked electrode plate unit.

In this embodiment of this application, when the first electrode plate unit is stacked onto the carrying plate, the limiting assembly is controlled to push the first electrode plate unit to move to the target stacking position, so as to adjust the position where the first electrode plate unit is stacked onto the carrying plate, allowing for more accurate stacking position of the first stacked electrode plate unit, and since the stacking position of the first electrode plate unit is no longer a random position after dropping, the tail flicking problem existing in the stacking of the first electrode plate can be effectively solved.

In an embodiment of this application, the controller 802 is further configured to: in a case that a second electrode plate unit of the anode strip is stacked on the first electrode plate unit, control the limiting assembly to push the second electrode plate unit to be aligned with the first electrode plate unit.

In this embodiment of this application, after the second electrode plate unit is stacked on the first electrode plate unit, the limiting assembly is controlled to push the electrode plate units to move to the target stacking position, and during the pushing process, under the action of the limiting assembly, the second electrode plate unit can be pushed to be aligned with the first electrode plate unit on the carrying plate, achieving the purpose of electrode plate shaping.

In an embodiment of this application, the anode strip includes an anode plate and separators disposed on both sides of the anode plate, a width of the separator in a first direction being greater than a width of the anode plate in the first direction, and the first direction being parallel to a crease formed by the folding; and
the target offset distance is an offset distance of an edge of the anode plate relative to the first reference position.

In this embodiment of this application, during determining of the target offset distance, the edge of the anode plate relative to the first reference position is determined with the first reference position as a reference, so that the target offset distance can be used as the offset distance of the stacking position of the first electrode plate unit relative to the second reference position when the first electrode plate unit is stacked onto the carrying plate, so as to accurately calculate the stacking position of the first electrode plate unit, achieve precise shaping of the first electrode plate, and effectively solve the tail flicking problem existing for the first electrode plate.

In an embodiment of this application, the battery stacking device 801 further includes a first detection unit and a second detection unit; and
the controller 802 is further configured to: obtain a first offset distance obtained through detection by the first detection unit and a second offset distance obtained through detection by the second detection unit, where the first offset distance is a distance between an edge of the anode plate and an edge of the separator in the first electrode plate unit, and the second offset distance is a second offset distance of the edge of the separator in the first electrode plate unit relative to the first reference position; and
use a sum of the first offset distance and the second offset distance as the target offset distance.

In this embodiment of this application, the first offset distance and the second offset distance are obtained through the two detection units respectively, thereby obtaining the target offset distance of the edge of the anode plate in the first electrode plate unit relative to the first reference position, so as to facilitate subsequent calculation of the target stacking position according to the target offset distance, thereby improving the accuracy of the stacking position of the first electrode plate.

In an embodiment of this application, the controller 802 is further configured to offset the target offset distance on the basis of the second reference position to obtain the target stacking position, where the target stacking position is a stacking area, and a width of the stacking area in the first direction is determined based on a width of the anode plate in the first direction.

In this embodiment of this application, the target offset distance is offset on the basis of the second reference position to obtain the target stacking position, which facilitates subsequent adjustment of the position where the first electrode plate unit is stacked onto the carrying plate when the first electrode plate unit is stacked onto the carrying plate, allowing for more accurate stacking position of the first stacked electrode plate unit, and effectively solving the tail flicking problem existing in the stacking of the first electrode plate.

In an embodiment of this application, the limiting assembly includes a first limiting member and a second limiting member disposed opposite each other in the first direction; and
the controller 802 is further configured to: control the first limiting member and the second limiting member to push the first electrode plate unit to move to the target stacking position; and
control the first limiting member and the second limiting member to separately retract to a first position, where a distance between the first limiting member and the second limiting member retracted to the first position is greater than or equal to a width of the separator.

In this embodiment of this application, after the first electrode plate unit moves to the target stacking position, the first limiting member and the second limiting member retract to the first position. The distance between the first limiting member and the second limiting member retracted to the first position is equal to the width of the separator in the first direction, or slightly greater than the width of the separator in the first direction, so as to prevent the first limiting member and the second limiting member from jamming the separator, which otherwise makes the separator unable to lay flat.

In an embodiment of this application, the carrying plate is provided with suction holes; and
the controller 802 is further configured to control the carrying plate to extend from an initial position to a receiving position so that the first electrode plate unit is stacked onto the carrying plate when the first electrode plate unit drops under a condition that the first electrode plate unit is the first stacked electrode plate unit;
control the limiting assembly to push the first electrode plate unit to move to the target stacking position; and
control the suction holes to conduct suction to adsorb the first electrode plate unit covering the suction holes.

In this embodiment of this application, when the first electrode plate unit is the first stacked electrode plate unit and the first electrode plate unit drops, the carrying plate extends from the initial position to the receiving position, so that the first electrode plate unit is stacked onto the support members of the carrying plate, and after the limiting assembly pushes the first electrode plate unit to move to the target stacking position, the suction holes on the support members are controlled to conduct suction to adsorb the first electrode plate unit. In this way, subsequently, after the second electrode plate unit drops on the first electrode plate unit, when the limiting assembly pushes the first electrode plate unit and the second electrode plate unit to move, the first electrode plate unit will not move due to the adsorption of the suction holes, and the second electrode plate unit will move with the limiting assembly due to no adsorption of the suction holes, thereby aligning the second electrode plate unit with the first electrode plate unit and achieving the purpose of electrode plate shaping.

In an embodiment of this application, the controller 802 is further configured to: when the number of electrode plate units stacked on the carrying plate is a preset threshold, cut off a connection between a third electrode plate unit and other electrode plate units, where the third electrode plate unit is the last electrode plate unit stacked onto the carrying plate, and the other electrode plate units refer to electrode plate units of the anode strip that are not stacked onto the carrying plate; and
control the suction holes to stop conducting suction and control the carrying plate to retract to the initial position, so that the electrode plate units stacked on the carrying plate drop onto a stacking platform below the carrying plate.

In this embodiment, when the number of electrode plate units stacked on the carrying plate is the preset threshold, the connection between the third electrode plate unit and other electrode plate units is cut off; and the suction holes are controlled to stop conducting suction, and the carrying plate is controlled to retract to the initial position, so that the electrode plate units stacked on the carrying plate drop onto the stacking platform below the carrying plate. In this way, a group of neatly stacked electrode plate units are obtained for use in subsequent battery cell manufacturing processes.

It should be noted that for the specific structures and working principles of the battery stacking device 801, refer to FIGs. 2 and 6, and refer to the foregoing description. Details are not repeated herein.

It should be clearly understood that this application is not limited to the specific configurations and processes described above and shown in the drawings. For brevity, detailed descriptions of known methods are omitted herein. In the foregoing embodiments, several specific steps are described and shown as examples. However, the method processes of this application are not limited to the specific steps described and shown, and persons skilled in the art can make various changes, modifications, and additions; or change the order between steps on the premise of understanding the spirit of this application.

The functional blocks shown in the foregoing structural block diagrams may be implemented as hardware, software, firmware, or a combination thereof. When implemented as hardware, it may be, for example, an electronic circuit, an application specific integrated circuit (Application Specific Integrated Circuit, ASIC), appropriate firmware, a plug-in, a function card, or the like. When implemented as software, elements of this application are programs or code segments used to perform required tasks. The programs or code segments may be stored in a machine-readable medium, or transmitted over a transmission medium or a communication link by a data signal carried in a carrier wave. The "machine-readable medium" may include any medium capable of storing or transmitting information. Examples of the machine-readable media include an electronic circuit, s semiconductor memory device, an ROM, a flash memory, an erasable ROM (EROM), a floppy disk, a CD-ROM, an optical disk, a hard disk, a fiber optic medium, a radio frequency (Radio Frequency, RF) link, and the like. The code segments may be downloaded via a computer network such as the Internet or an intranet.

It should also be noted that the example embodiments mentioned in this application describe some methods or systems based on a series of steps or apparatuses. However, this application is not limited to the order of the foregoing steps, to be specific, the steps may be performed in the order mentioned in the embodiments, or in an order different from that in the embodiments, or several steps may be performed simultaneously.

The various aspects of the present disclosure are described above with reference to flowcharts and/or block diagrams of the method, apparatus, device, and computer program product according to the embodiments of this disclosure. It should be understood that each block of the flowcharts and/or block diagrams and a combination of blocks in the flowcharts and/or block diagrams can be implemented through computer program instructions. These computer program instructions may be provided to a processor of a general-purpose computer, special-purpose computer, or another programmable data processing apparatus to produce a machine, such that the instructions executed via the processor of the computer or another programmable data processing apparatus enable the implementation of the functions/actions specified in one or more blocks of the flowcharts and/or block diagrams. Such processor may be but is not limited to a general-purpose processor, a special-purpose processor, an application-specific processor, or a field programmable logic circuit. It can also be understood that each block of the block diagrams and/or flowcharts and a combination of blocks in the block diagrams and/or flowcharts can also be implemented by dedicated hardware for performing the specified functions or actions, or by a combination of dedicated hardware and computer instructions.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the implementations can be combined in any manners. This application is not limited to the specific embodiments disclosed in this specification but includes all technical solutions falling within the scope of the claims.

## Claims

1. A battery stacking method applied to a battery stacking device, wherein the battery stacking device comprises a stacking mechanism for stacking an anode strip, the stacking mechanism comprises a carrying plate and a limiting assembly capable of moving on the carrying plate, a plurality of cathode plates are spaced apart on the anode strip, the anode strip is folded at spacings between adjacent cathode plates as folding positions to obtain a plurality of electrode plate units, each electrode plate unit comprises one cathode plate, each electrode plate unit is stacked onto the carrying plate of the stacking mechanism, and the method comprises:
obtaining a target offset distance of a first electrode plate unit of the anode strip relative to a first reference position, wherein the first reference position is a reference position set for the anode strip during a strip transportation stage;
obtaining a target stacking position of the first electrode plate unit based on the target offset distance and a second reference position, wherein the second reference position is a reference position set when the electrode plate units of the anode strip are stacked on the carrying plate; and
controlling the limiting assembly to push the first electrode plate unit to move to the target stacking position when the first electrode plate unit is stacked onto the carrying plate under a condition that the first electrode plate unit is the first stacked electrode plate unit.

2. The battery stacking method according to claim 1, wherein after the controlling the limiting assembly to push the first electrode plate unit to move to the target stacking position, the method further comprises:
in a case that a second electrode plate unit of the anode strip is stacked on the first electrode plate unit, controlling the limiting assembly to push the second electrode plate unit to be aligned with the first electrode plate unit.

3. The battery stacking method according to claim 1 or 2, wherein the anode strip comprises an anode plate and separators disposed on both sides of the anode plate, a width of the separator in a first direction being greater than a width of the anode plate in the first direction, and the first direction being parallel to a crease formed by the folding; and
the target offset distance is an offset distance of an edge of the anode plate relative to the first reference position.

4. The battery stacking method according to claim 3, wherein the battery stacking device further comprises a first detection unit and a second detection unit; and
the obtaining the target offset distance of the first electrode plate unit of the anode strip relative to the first reference position comprises:
obtaining a first offset distance obtained through detection by the first detection unit and a second offset distance obtained through detection by the second detection unit, wherein the first offset distance is a distance between an edge of the anode plate and an edge of the separator in the first electrode plate unit, and the second offset distance is a second offset distance of the edge of the separator in the first electrode plate unit relative to the first reference position; and
using a sum of the first offset distance and the second offset distance as the target offset distance.

5. The battery stacking method according to claim 3, wherein the obtaining the target stacking position of the first electrode plate unit based on the target offset distance and the second reference position comprises:
offsetting the target offset distance on the basis of the second reference position to obtain the target stacking position, wherein the target stacking position is a stacking area, and a width of the stacking area in the first direction is determined based on a width of the anode plate in the first direction.

6. The battery stacking method according to claim 3, wherein the limiting assembly comprises a first limiting member and a second limiting member disposed opposite each other in the first direction;
the controlling the limiting assembly to push the first electrode plate unit to move to the target stacking position comprises:
controlling the first limiting member and the second limiting member to push the first electrode plate unit to move to the target stacking position; and
after the controlling the limiting assembly to push the first electrode plate unit to move to the target stacking position, the method further comprises:
controlling the first limiting member and the second limiting member to separately retract to a first position, wherein a distance between the first limiting member and the second limiting member retracted to the first position is greater than or equal to a width of the separator.

7. The battery stacking method according to claim 1, wherein the carrying plate is provided with suction holes; and
the controlling the limiting assembly to push the first electrode plate unit to move to the target stacking position when the first electrode plate unit is stacked onto the carrying plate under a condition that the first electrode plate unit is the first stacked electrode plate unit comprises:
controlling the carrying plate to extend from an initial position to a receiving position so that the first electrode plate unit is stacked onto the carrying plate when the first electrode plate unit drops under a condition that the first electrode plate unit is the first stacked electrode plate unit;
controlling the limiting assembly to push the first electrode plate unit to move to the target stacking position; and
controlling the suction holes to conduct suction to adsorb the first electrode plate unit covering the suction holes.

8. The battery stacking method according to claim 7, the method further comprising:
when the number of electrode plate units stacked on the carrying plate is a preset threshold, cutting off a connection between a third electrode plate unit and other electrode plate units, wherein the third electrode plate unit is the last electrode plate unit stacked onto the carrying plate, and the other electrode plate units refer to electrode plate units of the anode strip that are not stacked onto the carrying plate; and
controlling the suction holes to stop conducting suction and controlling the carrying plate to retract to the initial position, so that the electrode plate units stacked on the carrying plate drop onto a stacking platform below the carrying plate.

9. A battery stacking apparatus applied to a battery stacking device, wherein the battery stacking device comprises a stacking mechanism for stacking an anode strip, the stacking mechanism comprises a carrying plate and a limiting assembly capable of moving on the carrying plate, a plurality of cathode plates are spaced apart on the anode strip, the anode strip is folded at spacings between adjacent cathode plates as folding positions to obtain a plurality of electrode plate units, each electrode plate unit comprises one cathode plate, each electrode plate unit is stacked onto the carrying plate of the stacking mechanism, and the battery stacking apparatus comprises:
a first obtaining module configured to obtain a target offset distance of a first electrode plate unit of the anode strip relative to a first reference position, wherein the first reference position is a reference position set for the anode strip during a strip transportation stage;
a second obtaining module configured to obtain a target stacking position of the first electrode plate unit based on the target offset distance and a second reference position, wherein the second reference position is a reference position set when the electrode plate units of the anode strip are stacked on the carrying plate; and
a first control module configured to control the limiting assembly to push the first electrode plate unit to move to the target stacking position when the first electrode plate unit is stacked onto the carrying plate under a condition that the first electrode plate unit is the first stacked electrode plate unit.

10. A battery stacking system, the battery stacking system comprising a battery stacking device and a controller, wherein the battery stacking device comprises a stacking mechanism for stacking an anode strip, the stacking mechanism comprises a carrying plate and a limiting assembly capable of moving on the carrying plate, a plurality of cathode plates are spaced apart on the anode strip, the anode strip is folded at spacings between adjacent cathode plates as folding positions to obtain a plurality of electrode plate units, each electrode plate unit comprises one cathode plate, each electrode plate unit is stacked onto the carrying plate of the stacking mechanism, and the controller is configured to:
obtain a target offset distance of a first electrode plate unit of the anode strip relative to a first reference position, wherein the first reference position is a reference position set for the anode strip during a strip transportation stage;
obtain a target stacking position of the first electrode plate unit based on the target offset distance and a second reference position, wherein the second reference position is a reference position set when the electrode plate units of the anode strip are stacked on the carrying plate; and
control the limiting assembly to push the first electrode plate unit to move to the target stacking position when the first electrode plate unit is stacked onto the carrying plate under a condition that the first electrode plate unit is the first stacked electrode plate unit.
